# FASCICULE DE BREVET EUROPEEN

(11) **EP 3 829 961 B1**
(45) Date de publication et mention de la délivrance du brevet: **03.12.2025**
(21) Numéro de dépôt: 19791298.3
(22) Date de dépôt: 31.07.2019
(51) Int. Cl.: B62D 21/15, B62D 25/04

(54) **STRUCTURE DE PIED AVANT DAUTOMOBILE**
VORDERGELENKSTÜTZE FÜR KRAFTFAHRZEUGE
AUTOMOBILE FRONT HINGE PILLAR STRUCTURE

(30) Priorité: 01.08.2018 FR 1857189
(43) Date de publication de la demande: 09.06.2021
(73) Titulaire: Stellantis Auto SAS, 78300 Poissy (FR); Autotech Engineering, 48340 Amorebieta-Etxano (ES)
(72) Inventeur: PROST, Fabien, 25200 Montbeliard (FR); DIDIER, Vincent, 25750 Arcey (FR); GODOY, Bruno, 25490 Dampierre les Bois (FR); ALPY, Eric, 25460 Etupes (FR); BARBIER, Matthieu, 75017 Paris (FR); NIESS, Matthieu, 89200 Avallon (FR); RULLAUD, Yoann Aurelien, 25000 Besançon (FR); OULAL, Mehdi, 92170 Vanves (FR)
(74) Mandataire: BCIP
(86) Numéro de dépôt international: PCT/FR2019/000123
(87) Numéro de publication internationale: WO 2020/025863

(56) Documents cités:
- WO-A1-2014/154962
- WO-A1-2016/132025
- FR-A1- 2 926 280
- US-A1- 2005 046 237

## Description

La présente invention se situe dans le domaine des véhicules et, notamment des véhicules automobiles. L'invention concerne une structure de pied avant de véhicule, un véhicule comprenant une telle structure, et un procédé de fabrication d'une telle structure de pied avant.

Généralement, les pieds avant (US 2005/046237 A1) et arrière d'un véhicule sont des montants situés vers l'avant ou l'arrière du côté de caisse, entre un passage de roue et une ouverture de porte. Les pieds ont des géométries différentes, spécifiques à leur lieu d'implantation à l'avant ou à l'arrière du véhicule.

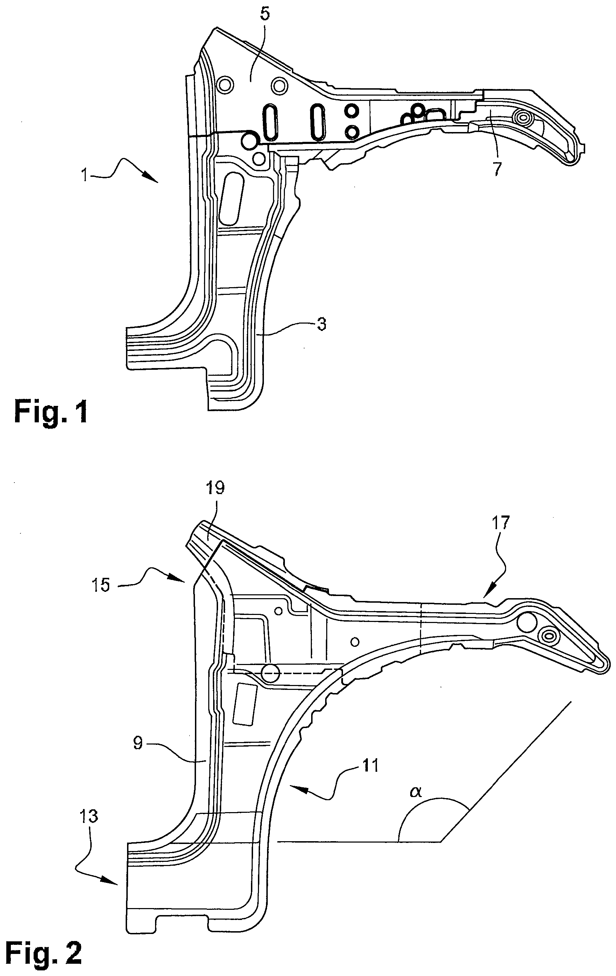

Un pied avant peut être composé de plusieurs pièces de structure assemblées entre elles par soudage ou rivetage. La figure 1 comprend un agencement de pièces soudées ensemble de sorte à former un pied avant 1. Les différentes pièces ainsi assemblées comprennent un pied de renfort avant 3, un gousset 5 supérieur de pied avant et un renfort avant 7 côté habitacle. Lors d'un choc frontal, les efforts en résultant sont transmis à la structure du véhicule par les longerons et par les montants de baies formant deux voies d'efforts. Une troisième voie d'effort comprend le renfort avant côté habitacle 7, agencé de chaque côté du véhicule au niveau du passage de roue de manière à transmettre les efforts reçus aux longerons et aux montants de baie par l'intermédiaire des goussets 5 supérieurs de pied avant et des renforts de pied avant 3.

En particulier, en cas de choc frontal avec un faible recouvrement de l'avant du véhicule, connu sous le nom de choc « small overlap », la partie latérale de la structure avant du véhicule est fortement sollicitée. Ce type de choc correspond à une situation dans laquelle un impacteur enfonce l'avant du véhicule en ne rentrent en contact avec qu'une partie de la face avant du véhicule comprenant le bord latéral de ladite face avant Ce type de choc correspond par exemple à un choc frontal entre deux véhicules décalés l'un par rapport à l'autre. Dans ce type de choc, le renfort avant côté habitacle qui est en vis-à-vis de l'impacteur va être principalement sollicité. Si la résistance mécanique de ce renfort n'est pas suffisante, ledit renfort se déforme de manière trop importante au cours de ce type de choc, jusqu'à permettre à l'impacteur de pousser contre la roue qui elle-même va charger le pied avant et entraîner son déplacement vers l'arrière du véhicule. De plus, si le pied avant n'est pas suffisamment résistant, il risque de reculer aussi sous la contrainte transmise par le renfort avant au cours du choc. Les risques d'intrusion dans l'habitacle sont alors importantes. Il est utile d'avoir un équilibre entre la résistance mécanique du renfort et de pied avant pour assurer à la fois la déformation de l'avant du véhicule et dudit renfort permettant l'absorption de l'énergie au cours du choc tout en limitant les intrusions dans l'habitacle.

Un problème connu résultant de l'assemblage de ces différentes pièces est un problème d'étanchéité qu'il serait intéressant de pouvoir résoudre. Par ailleurs, l'industrie automobile est à la recherche constante de solutions pour diminuer les coûts de fabrication des véhicules et pour réduire leur masse. Enfin, il y a un souci constant d'amélioration des prestations mécaniques et de tenue en matière de chocs. C'est pourquoi plusieurs autres types de structures de pied avant ont déjà été proposés.

Le document FR2926056 propose un pied avant renforcé de véhicule comprenant une partie supérieure, ou gousset, et une partie inférieure, ou renfort de pied avant. Le renfort de pied avant est constitué en une pièce unique présentant différents emboutissages permettant de le rigidifier afin d'améliorer ses prestations en matière de limitation de la rotation du pied avant en cas de choc frontal.

Le document FR2800698 propose une structure de pied avant réunissant en une seule pièce le renfort de pied avant et le gousset supérieur de pied avant. La pièce résultante s'étend sensiblement verticalement et comprend des supports d'extrémités de poutre pour sa connexion au longeron, au montant de baie et au renfort avant côté habitacle. La pièce est préférentiellement réalisée en une pièce unique de fonderie de métal léger, notamment de l'aluminium ou d'alliage de métaux légers, notamment un alliage d'aluminium.

Le document EP2080689 décrit un dispositif de renfort latéral destiné à équiper un bloc avant de véhicule automobile. Le dispositif comprend un élément de renfort de forme allongée, qui est destiné à être fixé sur la structure de caisse du véhicule au niveau d'une paroi latérale du bloc avant en s'étendant, selon la direction longitudinale du véhicule, entre un pied de montant avant du véhicule adjacent à la paroi latérale et une extrémité avant du bloc avant, avec l'axe longitudinal de l'élément de renfort dirigé sensiblement parallèlement à la direction longitudinale.

L'invention a pour objectif d'apporter une réponse aux inconvénients et soucis rencontrés dans l'art antérieur en proposant une nouvelle structure de pied avant qui soit plus étanche. L'invention a également pour objectif de proposer une nouvelle structure de pied avant qui soit plus légère. L'invention a pour objectif d'améliorer les prestations du véhicule en cas de choc frontal à faible recouvrement (i.e. de type « small overlap »). L'invention a enfin pour objectif de proposer un procédé pour la fabrication d'une telle structure qui soit plus économique.

A cet effet et selon un premier aspect, l'invention a pour objet un pied avant de véhicule constitué d'une pièce emboutie comprenant un corps central destiné à s'étendre verticalement, de sorte à montrer une extrémité inférieure et une extrémité supérieure et des bords latéraux, le pied avant étant remarquable en ce qu'il comprend en outre une extension avant s'étendant depuis un desdits bords latéraux dudit corps central, de telle sorte à ce que ledit corps central et ladite extension forment une seule pièce.

Comme on l'aura compris à la lecture de la définition qui vient d'en être donnée, l'invention est remarquable en ce qu'elle propose de réunir trois pièces de structure, à savoir le gousset supérieur de pied avant, le renfort pied avant et le renfort avant côté habitacle, en une seule. Ce faisant l'invention répond aux problèmes d'étanchéité soulevés dans l'art antérieur. L'invention permet également d'alléger le poids global du véhicule. Enfin, l'invention va simplifier le procédé de montage du véhicule puisqu'il n'est plus nécessaire de procéder à l'assemblage de ces différentes pièces, ce qui diminue les coûts globaux de production.

Selon un mode de réalisation préféré, le corps central comprend au niveau de son extrémité inférieure une zone de fixation à un longeron et/ou au niveau de son extrémité supérieure une zone de fixation à un montant de baie. Le corps central reprend les fonctions d'un renfort de pied avant et d'un gousset supérieur de pied avant.

Avantageusement, ladite extension avant :
- s'étend depuis un desdits bords latéraux dudit corps central selon une direction sensiblement horizontale ; et/ou
- s'étend depuis un desdits bords latéraux dudit corps central à une hauteur comprise entre les extrémités inférieure et supérieure du corps central ; et/ou
- forme avec le corps central une forme en arc de cercle destinée à former un passage de roue ; de préférence l'angle α au centre interceptant ledit arc de cercle est supérieur ou égal à 45°.

Selon un mode de réalisation préféré, le corps central et/ou l'extension avant comprennent au moins une nervure de renfort ; de préférence, l'extension avant comprend au moins une nervure de renfort agencée pour s'étendre horizontalement.

Selon une mise en œuvre de l'invention, le pied avant est fabriqué en acier à ultra haute limite élastique présentant, après emboutissage à chaud, une résistance mécanique Rm d'au moins 1200 MPa telle que mesurée selon la norme ISO 6892-1:2016 et un allongement à la rupture d'au moins 3 % telle que mesurée selon la norme ISO 6892-1:2016.

En variante, le corps central dudit pied avant présente une résistance mécanique supérieure à la résistance mécanique montrée par son extension avant ; de préférence, le corps central présente une résistance mécanique Rm d'au moins 1200 MPa et l'extension avant présente une résistance mécanique Rm comprise entre 300 et 1150 MPa, la résistance mécanique étant mesurée selon la norme ISO 6892-1:2016.

En variante, l'épaisseur du corps centrale est supérieure à celle de l'extension avant. C'est-à-dire que l'épaisseur de la partie formant le corps centrale est supérieure à l'épaisseur de la partie formant l'extension.

Selon un deuxième aspect, l'invention a pour objet un ensemble comprenant un pied avant tel que défini selon le premier aspect, l'ensemble comprenant en outre une pièce de renfort configurée pour se superposer au moins en partie à l'extrémité supérieure dudit corps central et à ladite extension avant. Ladite pièce de renfort est assemblée au pied par soudage.

Selon un troisième aspect, l'invention a pour objet une pièce de renfort remarquable en ce qu'elle se compose d'une pièce en acier emboutie à chaud et configurée pour montrer une forme complémentaire au moins en partie à l'extrémité supérieure du corps central et à l'extension avant d'un pied avant selon le premier aspect, de sorte à pouvoir s'y superposer. De préférence, ladite pièce de renfort est réalisée en un acier présentant, après emboutissage à chaud, une résistance mécanique Rm comprise entre 400 et 1100 MPa, la résistance mécanique étant mesurée selon la norme ISO 6892-1:2016.

Selon un quatrième aspect, l'invention a pour objet un véhicule remarquable en ce qu'il comprend au moins un pied avant tel que défini selon le premier aspect, ou un ensemble selon le deuxième aspect.

Selon un cinquième aspect, l'invention a pour objet un procédé de fabrication d'un pied avant selon le premier aspect, le corps central dudit pied avant présente une résistance mécanique supérieure à la résistance mécanique montrée par son extension avant, le procédé étant remarquable en ce qu'il comprend une opération de trempe différentielle comprenant au moins :
- une étape de chauffe d'un flan d'acier à une température au-delà de laquelle la structure de l'acier devient austénitique ;
- une étape d'emboutissage à chaud du flan chauffé dans un outil d'emboutissage présentant au moins deux zones ; et
- une étape de trempe différentielle des différentes zones, de telle sorte qu'au moins une zone de l'outil d'emboutissage est refroidie à une vitesse de refroidissement supérieure à la vitesse de refroidissement appliquée à une autre zone.

De préférence, l'opération de trempe différentielle comprend lors de l'étape d'emboutissage une étape supplémentaire de chauffe d'une portion du flan embouti au niveau d'au moins une zone, de manière à ce qu'au moment de l'étape de trempe au moins une zone de l'outil d'emboutissage est portée à une température supérieure à la température montrée par une autre zone dudit outil.

Selon un sixième aspect, l'invention a pour objet un procédé de fabrication d'un pied avant selon le premier aspect, le corps central dudit pied avant présente une résistance mécanique supérieure à la résistance mécanique montrée par son extension avant, le procédé étant remarquable en ce qu'il comprend une opération de raboutage laser comprenant :
- une étape de soudage laser d'au moins deux éléments de tôle disposés adjacents de manière à former un flan de tôle comprenant au moins deux portions montrant des caractéristiques mécaniques différentes l'une de l'autre, et
- une étape d'emboutissage à chaud d'un tel flan de manière à former un pied avant comprenant un corps central et une extension montrant des caractéristiques mécaniques différentes l'une de l'autre.

L'invention sera bien comprise et d'autres aspects et avantages apparaîtront clairement à la lecture de la description qui suit donnée à titre d'exemple et en référence à la planche de dessins annexée selon laquelle :
- la figure 1 représente un ensemble formant une structure de pied avant selon l'art antérieur, et
- la figure 2 représente un ensemble formant une structure de pied avant selon l'invention.

Dans la description qui suit, le terme « comprendre » est synonyme de « inclure » et n'est pas limitatif en ce qu'il autorise la présence d'autres éléments dans la structure, le véhicule ou la pièce de renfort de pied avant auquel il fait référence. Il est entendu que le terme « comprendre » inclut les termes « consister en ». Sur les différentes figures, les mêmes références désignent des éléments identiques ou similaires. Les termes « inférieur », « supérieur », « avant », « arrière » s'entendront par rapport à l'orientation générale du véhicule. Le terme « inférieur » indiquera une proximité avec le sol plus importante selon la direction verticale que le terme « supérieur ». Le terme « avant » indiquera un positionnement orienté vers le devant d'un véhicule selon la direction horizontale et le terme « arrière » indiquera un positionnement orienté vers l'arrière d'un véhicule selon la même direction. Le terme « partie horizontale » définira une partie d'une pièce de véhicule s'étendant entre une extrémité avant et une extrémité arrière de ladite pièce. L'unité de mesure MPa correspond à « Méga Pascals ».

La figure 1 ayant été commentée en partie introductive, on se réfèrera à présent à la figure 2.

L'invention propose un pied avant 9 de véhicule constitué d'une pièce emboutie comprenant un corps central 11 destiné à s'étendre verticalement lorsqu'il est monté dans le véhicule, de sorte à montrer une extrémité inférieure 13 et une extrémité supérieure 15 et des bords latéraux, le pied avant 9 étant remarquable en ce qu'il comprend en outre une extension avant 17 s'étendant depuis un desdits bords latéraux dudit corps central 11, de telle sorte à ce que ledit corps central 11 et ladite extension avant 17 forment une seule pièce.

Selon un mode de réalisation préféré, le corps central 11 comprend au niveau son extrémité inférieure 13 une zone de fixation à un longeron et au niveau de son extrémité supérieure 15 une zone de fixation à un montant de baie. Le corps central 11 reprend donc les fonctions des pièces de renfort de pied avant et du gousset supérieur de pied avant de l'art antérieur. Les zones de fixations des longerons ou des montants de baie comprennent au moins une paroi et/ou au moins un rebord d'appui contre lequel vient en contact au moins une partie d'une paroi d'un longeron ou d'un montant de baie.

L'extension avant 17 du pied avant 9 selon l'invention reprend la fonction du renfort avant côté habitacle de l'art antérieur. A ce titre, l'extension avant 17 s'étend depuis un desdits bords latéraux dudit corps central 11 selon une direction sensiblement horizontale en direction de l'avant du véhicule dans lequel ledit pied avant 9 est destiné à être monté, et/ou à une hauteur comprise entre les extrémités inférieure 13 et supérieure 15 du corps central 11. Le pied avant 9 présente une forme générale de croix à trois branches, chaque branche reprenant une voie d'effort en cas de choc frontal. De préférence, une des branches, à savoir l'extension avant 17 montre un profil arqué.

Selon une configuration avantageuse, l'extension avant 17 forme avec le corps central 11, et en partie avec sa partie inférieure, une forme en arc de cercle destinée à former un passage de roue. De préférence, l'angle α au centre interceptant ledit arc de cercle est supérieur ou égal à 45°, préférablement l'angle α est supérieur ou égal à 50°, plus préférablement l'angle α est supérieur ou égal à 55°, et plus préférablement encore l'angle α est supérieur ou égal à 60°. Cette configuration est particulièrement avantageuse pour la tenue au choc à faible recouvrement de type « small overlap ». En effet, dans l'art antérieur, l'assemblage de différentes pièces ne permettait pas d'obtenir une liaison satisfaisante entre les feuillures au niveau du passage de roue. Sur la figure 1 on peut voir que la courbe délimitant le passage de roue est interrompue au niveau de la jonction entre le renfort 3 de pied avant et le renfort avant 7 côté habitacle. Ce décrochement nuit à la tenue en choc par un effet de coin rendant l'ensemble moins résistant. Le fait de n'avoir qu'une seule pièce comme dans l'invention permet une meilleure gestion de la géométrie de la pièce et une amélioration des prestations en matière de gestions des chocs à faible recouvrement.

Selon un mode de réalisation préféré, le corps central 11 et/ou l'extension avant 17 comprennent au moins une nervure de renfort (non représentée). De préférence, l'extension avant 17 comprend au moins une nervure de renfort agencée pour s'étendre horizontalement. La présence d'une ou plusieurs nervures de renfort permet de rigidifier ledit pied avant 9.

Selon une première mise en œuvre de l'invention, le pied avant 9 peut être homogène dans les caractéristiques mécaniques qu'il présente. L'homme du métier aura alors un avantage à utiliser pour sa fabrication un acier à ultra haute limite élastique présentant une résistance mécanique Rm d'au moins 1200 MPa telle que mesurée selon la norme ISO 6892-1:2016 et un allongement à la rupture d'au moins 3 % telle que mesurée selon la norme ISO 6892-1:2016. Des aciers présentant de telles caractéristiques sont disponibles sur le marché, par exemple commercialisés par ArcelorMittal sous le nom commercial Usibor^{©} 1500 ou 22MnB5, ces nuances d'acier présentent en effet, après une opération d'emboutissage à chaud une limite élastique Re de 1100 MPa, une résistance mécanique Rm de 1500 MPa et un allongement à la rupture A ≥ 6 %.

Selon une autre mise en œuvre de l'invention, le corps central 11 et l'extension avant 17 présentent des caractéristiques mécaniques différentes. En particulier, le corps central 11 du pied avant 9 présente une résistance mécanique supérieure à la résistance mécanique montrée par son extension avant 17. Ainsi, idéalement, le corps central 11 présente une résistance mécanique Rm d'au moins 1200 MPa alors que l'extension avant 17 présente une résistance mécanique Rm comprise entre 300 et 1150 MPa, la résistance mécanique étant mesurée selon la norme ISO 6892-1:2016. De préférence, la résistance mécanique Rm présentée par le corps central 11 est d'au moins 1300 MPa, plus préférablement d'au moins 1400 MPa et encore plus préférablement d'au moins 1500 MPa. De préférence, l'extension avant 17 présente une résistance mécanique comprise entre 350 et 1100 MPa, préférablement entre 400 et 1000 MPa, plus préférablement entre 400 et 900 MPa, et plus préférablement encore entre 450 et 800 MPa.

Les aciers pouvant être utilisés dans le domaine de l'emboutissage à chaud de pièces de structure de véhicule automobile peuvent être classés selon leurs caractéristiques mécaniques et en particulier par leur caractéristique de résistance mécanique Rm telle que mesurées selon la norme ISO 6892-1:2016 ainsi que leurs propriétés élastiques indiquées par leur allongement à la rupture A ou par leur limite d'élasticité Re, également mesurée selon la norme ISO 6892-1:2016.

Lorsqu'un acier est déformé, cette déformation est réversible et proportionnelle à la charge tant que l'on reste dans le domaine de déformation élastique de l'acier. Lorsque la charge devient trop importante, on entre dans le domaine de déformation plastique dans lequel les déformations subies par l'acier sont irréversibles. La limite d'élasticité Re d'un acier est la contrainte (charge unitaire) délimitant les domaines plastique et élastique. Lorsqu'une force est exercée sur un acier au-delà de sa limite d'élasticité, la déformation en résultant est donc irréversible. La résistance à la traction ou résistance mécanique Rm représente la contrainte maximale admissible par un acier. Lorsqu'une force est exercée sur un acier au-delà de sa limite de résistance mécanique, il y a rupture. L'allongement à la rupture A représente la déformation relative maximale admissible d'un acier avant rupture.

On distingue ainsi les aciers doux montrant une limite d'élasticité allant de 300 à 350 MPa, les aciers à haute limite élastique (HLE) montrant une limite d'élasticité allant de 400 à 700 MPa, les aciers à très haute limite élastique (THLE) montrant une limite d'élasticité allant de 800 à 1000 MPa et les aciers à ultra haute limite élastique (UHLE) montrant une limite d'élasticité de 1100 à 1500 MPa.

Aussi, lorsqu'il présente des propriétés mécaniques homogènes, le pied avant 9 selon l'invention sera préférentiellement réalisé en un acier à ultra haute limite d'élasticité. Tandis que, lorsqu'il présente des zones avec des propriétés mécaniques différentes, le pied avant 9 selon l'invention comprendra préférentiellement un corps central 11 en acier à très haute limite d'élasticité et une extension avant 17 en acier à haute limite d'élasticité.

En variante, lorsque le pied avant 9 selon l'invention présente des propriétés mécaniques homogènes, il peut être réalisé dans un acier ayant une résistance mécanique moindre qu'un acier à ultra haute limite d'élasticité, comme par exemple un acier à très haute limite d'élasticité ou haute limite d'élasticité, les épaisseurs étant alors choisies pour obtenir la résistance mécanique voulue des différentes parties dudit pied avant.

Selon une mise en œuvre préférée de l'invention, lorsqu'il comprend des portions montrant des caractéristiques mécaniques différentes, le pied avant 9 peut être formé par emboutissage à chaud avec refroidissement différentiel. Un exemple d'outil d'emboutissage à chaud avec refroidissement différentiel est décrit dans le document FR2927828. Le procédé de fabrication comprend une opération de trempe différentielle comprenant au moins :
- une étape de chauffe d'un flan d'acier à une température au-delà de laquelle la structure de l'acier devient austénitique ;
- une étape d'emboutissage du flan chauffé dans un outil d'emboutissage présentant au moins deux zones ;
- une étape de trempe différentielle des différentes zones, de telle sorte qu'au moins une zone de l'outil d'emboutissage est refroidie à une vitesse de refroidissement supérieure à la vitesse de refroidissement appliquée à une autre zone.

Selon un principe connu, plus la vitesse de refroidissement d'une pièce en acier est élevée, plus la résistance mécanique finale de la pièce est élevée. Aussi, selon l'invention, le corps central 11 du pied avant 9 sera refroidi à une vitesse de trempe supérieure à celle utilisée pour le refroidissement de l'extension avant 17.

De préférence, l'opération de trempe différentielle comprend lors de l'étape d'emboutissage une étape supplémentaire de chauffe d'une portion du flan embouti au niveau d'au moins une zone, de manière à ce qu'au moment de l'étape de trempe au moins une zone de l'outil d'emboutissage est portée à une température supérieure à la température montrée par une autre zone dudit outil. L'outil comprend alors une zone dite chaude et une zone dite froide. La ou les portions du pied avant 9 disposées dans la zone dite chaude présenteront une résistance mécanique inférieure à la ou les portions du pied avant 9 disposées dans la zone dite froide. Aussi, selon l'invention, le corps central 11 du pied avant 9 sera formé dans une zone dite froide de l'outil d'emboutissage tandis que son extension avant 17 sera formée dans une zone dite chaude dudit outil.

Le choix des températures de chauffe et des vitesses de refroidissement sera adapté sans peine par l'homme du métier en fonction des caractéristiques initiales de l'acier utilisé et des caractéristiques finales recherchées.

Selon une autre mise en œuvre préférée de l'invention, lorsqu'il comprend des portions montrant des caractéristiques mécaniques différentes, le pied avant 9 peut être formé par raboutage laser. Le raboutage laser est une technique connue de l'homme du métier qui consiste à placer l'un contre l'autre deux ou plusieurs flans que l'on soude entre eux par soudage laser de telle sorte à former un flan de tôle comprenant au moins deux parties adjacentes montrant des caractéristiques mécaniques et élastiques différentes. Le flan obtenu par raboutage laser est ensuite embouti à chaud au sein d'un seul outil de manière à obtenir une pièce montrant à différents endroits des caractéristiques mécaniques différentes. Dans le cas où le pied avant comporte des caractéristiques mécaniques non homogènes, des caractéristiques mécaniques différentes pour le corps central 11 et l'extension avant 17 peuvent être obtenues en utilisant pour ledit corps central 11 et ladite extension avant 17, des flans de tôles d'épaisseur différente ou/et des flans de tôles qui sont réalisées avec des aciers de nuances différentes. Par exemple, le corps central 11 peut être réalisée avec un flan de tôle en acier à ultra haute limite d'élasticité et l'extension 17 avec un flan de tôle en acier à haute limite d'élasticité, ou le corps central 11 peut être réalisée avec un flan de tôle d'épaisseur supérieure au flan de tôle utilisée pour l'extension 17. Une combinaison entre des épaisseurs de tôles et des nuances de tôles différentes peut être aussi envisagée. L'homme du métier saura choisir les épaisseurs ou/et nuances d'acier pour obtenir les caractéristiques mécaniques voulues des différentes parties formant le pied avant de l'invention.

Selon un mode de réalisation préféré, lorsqu'il est nécessaire, le pied avant 9 est renforcé par une pièce de renfort 19. Cette pièce de renfort 19 est une pièce en acier emboutie à chaud et configurée pour montrer une forme complémentaire au moins en partie à l'extrémité supérieure 15 du corps central 11 et à l'extension avant 17 d'un pied avant, de sorte à pouvoir s'y superposer. Eventuellement, ladite pièce de renfort comprend au moins une nervure de rigidification (non représentée). De préférence, ladite pièce de renfort 9 est réalisée en un acier présentant, après emboutissage à chaud, une résistance mécanique Rm comprise entre 400 et 1100 MPa, la résistance mécanique étant mesurée selon la norme ISO 6892-1:2016. La pièce de renfort 19 est assemblée au pied avant 9 par soudage. Les points de soudures sont agencés aussi bien sur le fond de la pièce que sur les feuillures.

## Revendications

1. Pied avant (9) de véhicule constitué d'une pièce emboutie comprenant un corps central (11) destiné à s'étendre verticalement, de sorte à montrer une extrémité inférieure (13) et une extrémité supérieure (15) et des bords latéraux, le pied avant (9) étant **caractérisé en ce qu'**il comprend en outre une extension avant (17) s'étendant depuis un desdits bords latéraux dudit corps central (11), de telle sorte à ce que ledit corps central (11) et ladite extension avant (9) forment une seule pièce.

2. Pied avant (9) selon la revendication 1, caractérisé en que le corps central (11) comprend au niveau de son extrémité inférieure (13) une zone de fixation à un longeron et/ou au niveau de son extrémité supérieure (15) une zone de fixation à un montant de baie.

3. Pied avant (9) selon l'une des revendications 1 ou 2, **caractérisé en ce que** ladite extension avant (17) :
- s'étend depuis un desdits bords latéraux dudit corps central (11) selon une direction sensiblement horizontale, et/ou
- s'étend depuis un desdits bords latéraux dudit corps central (11) à une hauteur comprise entre les extrémités inférieure (13) et supérieure (15) du corps central (11) ; et/ou
- forme avec le corps central (11) une forme en arc de cercle destinée à former un passage de roue ; de préférence l'angle α au centre interceptant ledit arc de cercle est supérieur ou égal à 45°.

4. Pied avant (9) selon l'une des revendications 1 à 3, **caractérisé en ce que** le corps central (11) et/ou l'extension avant (17) comprennent au moins une nervure de renfort ; de préférence, l'extension avant (17) comprend au moins une nervure de renfort agencée pour s'étendre horizontalement.

5. Pied avant (9) selon l'une des revendications 1 à 4, **caractérisé en ce que** :
- ledit pied avant (9) est fabriqué en acier à ultra haute limite élastique présentant, après emboutissage à chaud, une résistance mécanique Rm d'au moins 1200 MPa telle que mesurée selon la norme ISO 6892-1:2016 et un allongement à la rupture d'au moins 3 % telle que mesurée selon la norme ISO 6892-1:2016 ; ou **en ce que**
- le corps central (11) dudit pied avant (9) présente une résistance mécanique supérieure à la résistance mécanique montrée par son extension avant (17) ; de préférence, le corps central (11) présente une résistance mécanique Rm d'au moins 1200 MPa et l'extension avant (17) présente une résistance mécanique Rm comprise entre 300 et 1150 MPa, la résistance mécanique étant mesurée selon la norme ISO 6892-1:2016.

6. Pied avant (9) selon l'une des revendications 1 à 5, **caractérisé en ce que** l'épaisseur du corps centrale (11) est supérieure à celle de l'extension avant (17).

7. Ensemble comprenant un pied avant (9) selon l'une des revendications 1 à 6 **caractérisé en ce qu'**il comprend en outre une pièce de renfort (19) configurée pour se superposer au moins en partie à l'extrémité supérieure dudit corps central (11) et à ladite extension avant (17).

8. Ensemble selon la revendication 7 **caractérisé en ce que** ladite pièce de renfort (9) se compose d'une pièce en acier emboutie à chaud, et est réalisée en un acier présentant, après emboutissage à chaud, une résistance mécanique Rm comprise entre 400 et 1100 MPa, la résistance mécanique étant mesurée selon la norme ISO 6892-1:2016.

9. Véhicule **caractérisé en ce qu'**il comprend un pied avant (9) selon l'une des revendications 1 à 6, ou un ensemble selon l'une des revendications 7 ou 8.

10. Procédé de fabrication d'un pied avant (9) selon l'une des revendications 1 à 5, le corps central (11) dudit pied avant (9) présentant une résistance mécanique supérieure à la résistance mécanique montrée par son extension avant (17), le procédé étant **caractérisé en ce qu'**il comprend une opération de trempe différentielle comprenant au moins :
- une étape de chauffe d'un flan d'acier à une température au-delà de laquelle la structure de l'acier devient austénitique ;
- une étape d'emboutissage à chaud du flan chauffé dans un outil d'emboutissage présentant au moins deux zones ; et
- une étape de trempe différentielle des différentes zones, de telle sorte qu'au moins une zone de l'outil d'emboutissage est refroidie à une vitesse de refroidissement supérieure à la vitesse de refroidissement appliquée à une autre zone ;
de préférence, l'opération de trempe différentielle comprend lors de l'étape d'emboutissage une étape supplémentaire de chauffe d'une portion du flan embouti au niveau d'au moins une zone, de manière à ce qu'au moment de l'étape de trempe au moins une zone de l'outil d'emboutissage est portée à une température supérieure à la température montrée par une autre zone dudit outil.

11. Procédé de fabrication d'un pied avant (9) selon l'une des revendications 1 à 6, le corps central (11) dudit pied avant (9) présentant une résistance mécanique supérieure à la résistance mécanique montrée par son extension avant (17), le procédé étant **caractérisé en ce qu'**il comprend une opération de raboutage laser comprenant :
- une étape de soudage laser d'au moins deux éléments de tôle disposés adjacents de manière à former un flan de tôle comprenant au moins deux portions montrant des caractéristiques mécaniques différentes l'une de l'autre, et
- une étape d'emboutissage à chaud d'un tel flan de manière à former un pied avant (9) comprenant un corps central (11) et une extension avant (17) montrant des caractéristiques mécaniques différentes l'une de l'autre.

## Patentansprüche

1. Vorderfuß (9) eines Fahrzeugs, der aus einem eingeprägten Teil besteht, das einen zentralen Körper (11) umfasst, der sich vertikal erstrecken soll, um ein unteres Ende (13) und ein oberes Ende (15) und Seitenränder zu zeigen, wobei der vordere Fuß (9) ferner **dadurch gekennzeichnet ist, dass** er eine vordere Verlängerung (17) umfasst, die sich von einer der Seitenränder des zentralen Körpers (11) erstreckt, sodass der zentrale Körper (11) und die vordere Verlängerung (9) ein einziges Teil bilden.

2. Vorderfuß (9) nach Anspruch 1, **dadurch gekennzeichnet, dass** der Mittelkörper (11) an seinem unteren Ende (13) einen Bereich zur Befestigung an einem Längsträger und/oder an seinem oberen Ende (15) einen Bereich zur Befestigung an einem Schachtpfosten aufweist.

3. Vorderfuß (9) nach einem der Ansprüche 1 oder 2, **dadurch gekennzeichnet, dass** die vordere Verlängerung (17):
- sich von einem der Seitenränder des Zentralkörpers (11) in einer im Wesentlichen horizontalen Richtung erstreckt und/oder
- sich von einem der Seitenränder des Zentralkörpers (11) in einer Höhe zwischen dem unteren (13) und oberen (15) Ende des Zentralkörpers (11) erstreckt und/oder
- Mit dem Zentralkörper (11) eine Kreisbogenform zur Bildung eines Raddurchgangs bildet, wobei vorzugsweise der den Kreisbogen schneidende Zentrumswinkel α größer oder gleich 45° ist.

4. Vorderfuß (9) nach einem der Ansprüche 1 bis 3, **dadurch gekennzeichnet, dass** der Mittelkörper (11) und/oder die vordere Verlängerung (17) mindestens eine Verstärkungsrippe aufweisen; vorzugsweise die vordere Verlängerung (17) mindestens eine Verstärkungsrippe aufweist, die so angeordnet ist, dass sie sich horizontal erstreckt.

5. Vorderfuß (9) nach einem der Ansprüche 1 bis 4, **dadurch gekennzeichnet, dass**:
- Der Vorderfuß (9) ist aus Stahl mit ultrahoher Streckgrenze hergestellt, der nach dem Warmziehen eine mechanische Festigkeit Rm von mindestens 1200 MPa, gemessen nach ISO 6892-1:2016, und eine Bruchdehnung von mindestens 3 %, gemessen nach ISO 6892-1:2016, aufweist, oder dass
- Der Zentralkörper (11) des vorderen Fußes (9) weist eine höhere mechanische Festigkeit auf als die durch seine vordere Verlängerung (17) gezeigte mechanische Festigkeit; vorzugsweise weist der Zentralkörper (11) eine mechanische Festigkeit Rm von mindestens 1200 MPa und die vordere Verlängerung (17) eine mechanische Festigkeit Rm zwischen 300 und 1150 MPa auf, wobei die mechanische Festigkeit nach ISO 6892-1:2016 gemessen wird.

6. Vorderfuß (9) nach einem der Ansprüche 1 bis 5, **dadurch gekennzeichnet, dass** die Dicke des Mittelkörpers (11) größer ist als die der vorderen Verlängerung (17).

7. Anordnung mit einem vorderen Fuß (9) nach einem der Ansprüche 1 bis 6, **dadurch gekennzeichnet, dass** sie ferner ein Verstärkungsteil (19) aufweist, das so konfiguriert ist, dass es sich zumindest teilweise über das obere Ende des zentralen Körpers (11) und über die vordere Verlängerung (17) erstreckt.

8. Anordnung nach Anspruch 7, **dadurch gekennzeichnet, dass** das Verstärkungsteil (9) aus einem warmgepressten Stahlteil besteht und aus einem Stahl hergestellt ist, der nach dem Warmziehen eine mechanische Festigkeit Rm zwischen 400 und 1100 MPa aufweist, wobei die mechanische Festigkeit nach der Norm ISO 6892-1:2016 gemessen wird.

9. Fahrzeug, **dadurch gekennzeichnet, dass** es einen Vorderfuß (9) nach einem der Ansprüche 1 bis 6 oder eine Anordnung nach einem der Ansprüche 7 oder 8 umfasst.

10. Verfahren zur Herstellung eines Vorderfußes (9) nach einem der Ansprüche 1 bis 5, wobei der Mittelkörper (11) des Vorderfußes (9) eine mechanische Festigkeit aufweist, die größer ist als die mechanische Festigkeit, die durch seine vordere Verlängerung (17) gezeigt wird, wobei das Verfahren **dadurch gekennzeichnet ist, dass** es einen Differenzial-Abschreckvorgang umfasst, der mindestens Folgendes umfasst:
- ein Schritt, bei dem ein Stahlrohling auf eine Temperatur erhitzt wird, bei deren Überschreitung die Stahlstruktur austenitisch wird;
- einen Warmziehvorgang des erwärmten Zuschnitts in einem Ziehwerkzeug mit mindestens zwei Zonen; und
- eine Differenzialabschreckstufe der verschiedenen Bereiche, sodass mindestens ein Bereich des Ziehwerkzeugs mit einer Abkühlgeschwindigkeit abgekühlt wird, die höher ist als die Abkühlgeschwindigkeit, die auf einen anderen Bereich aufgebracht wird;
Vorzugsweise umfasst der Differenzialabschreckvorgang während des Ziehvorgangs einen zusätzlichen Schritt des Erhitzens eines Abschnitts des gezogenen Zuschnitts an mindestens einem Bereich, sodass zum Zeitpunkt des Abschreckvorgangs mindestens ein Bereich des Ziehwerkzeugs auf eine Temperatur oberhalb der von einem anderen Bereich des Ziehwerkzeugs gezeigten Temperatur gebracht wird.

11. Verfahren zur Herstellung eines Vorderfußes (9) nach einem der Ansprüche 1 bis 6, wobei der Mittelkörper (11) des Vorderfußes (9) eine mechanische Festigkeit aufweist, die größer ist als die mechanische Festigkeit, die durch seine vordere Verlängerung (17) gezeigt wird, wobei das Verfahren **dadurch gekennzeichnet ist, dass** es einen Vorgang des Laserhockens umfasst, der Folgendes umfasst:
- einem Schritt des Laserschweißens von mindestens zwei benachbarten Blechelementen, die so angeordnet sind, dass sie einen Blechzuschnitt bilden, der mindestens zwei Abschnitte mit voneinander verschiedenen mechanischen Eigenschaften umfasst, und
- ein Warmprägeschritt eines solchen Zuschnitts, um einen vorderen Fuß (9) zu bilden, der einen Mittelkörper (11) und eine vordere Verlängerung (17) aufweist, die voneinander unterschiedliche mechanische Eigenschaften aufweisen.

## Claims

1. A front foot (9) of a vehicle consisting of a stamped piece comprising a centre body (11) intended to extend vertically, so as to show a lower end (13) and an upper end (15) and lateral edges, the front foot (9) being **characterised in that** it further comprises a front extension (17) extending from one of said lateral edges of said centre body (11), so that said centre body (11) and said front extension (9) form a single component.

2. Front foot (9) according to claim 1, wherein the central body (11) comprises at the level of its lower end (13) a zone for fixing to a spar and/or at the level of its upper end (15) a zone for fixing to a bay upright.

3. Front foot (9) according to either of Claims 1 and 2, **characterised in that** the said front extension (17):
- extends from one of said lateral edges of said central body (11) in a substantially horizontal management, and/or
- extends from one of said lateral edges of said central body (11) to a height between the lower (13) and upper (15) ends of the central body (11); and/or
- forms with the central body (11) an arc of a circle shape intended to form a wheel arch; preferably the angle α at the compound intercepting said arc of a circle is greater than or equal to 45°.

4. Front foot (9) according to one of Claims 1 to 3, **characterised in that** the central body (11) and/or the front extension (17) comprise at least one reinforcing rib; preferably, the front extension (17) comprises at least one reinforcing rib arranged to extend horizontally.

5. Front foot (9) according to one of Claims 1 to 4, **characterised in that**:
- said front leg (9) is made of ultra high elastic limit steel having, after hot stamping, a mechanical strength Rm of at least 1200 MPa as measured according to ISO 6892-1:2016 and an elongation at break of at least 3 % as measured according to ISO 6892-1:2016; or
- the central body (11) of the said front foot (9) has a mechanical strength greater than the mechanical strength shown by its front extension (17); preferably, the central body (11) has a mechanical strength Rm of at least 1200 MPa and the front extension (17) has a mechanical strength Rm of between 300 and 1150 MPa, the mechanical strength being measured according to the standard ISO 6892-1:2016.

6. Front foot (9) according to one of Claims 1 to 5, **characterised in that** the thickness of the central body (11) is greater than that of the front extension (17).

7. Assembly comprising a front leg (9) according to one of Claims 1 to 6, **characterised in that** it further comprises a reinforcing component (19) configured to be superposed at least in part on the upper end of said central body (11) and on said front extension (17).

8. Assembly according to claim 7, wherein said reinforcing component (9) is made of a hot-drawn steel component, and is realised of a steel having, after hot stamping, a mechanical strength Rm of between 400 and 1100 MPa, the mechanical strength being measured according to ISO standard 6892-1:2016.

9. Vehicle **characterised in that** it comprises a front leg (9) according to one of Claims 1 to 6, or an assembly according to one of Claims 7 or 8.

10. Method for manufacturing a front foot (9) according to one of Claims 1 to 5, the central body (11) of the said front foot (9) having a mechanical strength greater than the mechanical strength shown by its front extension (17), the method being **characterised in that** it comprises a differential tempering task comprising at least:
- a step of heating a steel blank to a temperature beyond which the steel structure becomes austenitic;
- a step of hot stamping of the heated blank in a stamping tool having at least two zones; and
- a step of differential quenching of the different zones, such that at least one zone of the stamping tool is cooled at a higher cooling rate than the cooling rate of another zone;
preferably, the differential tempering task comprises, during the stamping step, an additional step of heating a portion of the stamped blank to the level of at least one zone, such that, at the time of the tempering step, at least one zone of the stamping tool is brought to a temperature higher than the temperature shown by another zone of said tool.

11. Method for manufacturing a front leg (9) according to one of Claims 1 to 6, the central body (11) of said front leg (9) having a mechanical strength greater than the mechanical strength shown by its front extension (17), the method being **characterised in that** it comprises a laser butting task comprising:
- laser welding of at least two sheet items disposed adjacent to each other so as to form a sheet blank comprising at least two portions exhibiting different mechanical characteristics from each other, and
- step of hot stamping of such a blank so as to form a front foot (9) comprising a central body (11) and a front extension (17) exhibiting different mechanical characteristics from each other.
